(19) **Europäisches Patentamt / European Patent Office / Office européen des brevets**

(11) **EP 4 687 081 A1**

(12) # EUROPEAN PATENT APPLICATION

(43) Date of publication:
**04.02.2026 Bulletin 2026/06**

(21) Application number: **25190076.7**

(22) Date of filing: **17.07.2025**

(51) International Patent Classification (IPC):
**G06N 10/40** $^{(2022.01)}$

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.08.2024  FI 20245945**

(71) Applicant: **IQM Finland Oy**
**02150 Espoo (FI)**

(72) Inventors:
- **Ku, Hsiang-Sheng**
  **80992 Munich (DE)**
- **Gusenkova, Daria**
  **80992 Munich (DE)**
- **Kindel, William**
  **80992 Munich (DE)**
- **Deppe, Frank**
  **80992 Munich (DE)**

(74) Representative: **Leinweber & Zimmermann**
**Patentanwalts-PartG mbB**
**European Patent Attorneys**
**Viktualienmarkt 8**
**80331 München (DE)**

(54) **QUANTUM CHIP AND METHOD OF PERFORMING QUANTUM SIMULATION USING THE QUANTUM CHIP**

(57)     A quantum chip (1, 10, 100, 1000a, 1000b) comprising a plurality of qubit-resonator pairs (2, 4), each pair comprising a first qubit (2) and a resonator (4) and being configured to enable coupling therebetween, said first qubits (2) being arranged in a one-dimensional chain (3) configured to enable nearest-neighbor coupling between the first qubits (2), wherein the quantum chip (1, 10, 100, 1000a, 1000b) further comprises for at least one qubit-resonator pair an associated tunable coupler (6) for enabling the coupling between the first qubit (2) and the resonator (4). The invention also relates to a method of performing quantum simulation of families of spin-boson or Fermion-boson models using the quantum chip (1, 10, 100, 1000a, 1000b) according to the invention.

Fig. 1

## Description

The present invention is related to a quantum chip comprising a plurality of qubit-resonator pairs, each pair comprising a first qubit and a resonator and being configured to enable coupling therebetween, said first qubits being arranged in a one-dimensional chain configured to enable nearest-neighbor coupling between the first qubits.

Furthermore, the invention is related to a method of performing quantum simulation of families of spin-boson or Fermion-boson models using the quantum chip according to the present invention.

Quantum chips comprising a plurality of qubit-resonator pairs each having a first qubit and a resonator coupled to each other are promising platforms for applications in the field of quantum information processing. A quantum chip as mentioned above is known in the art, and is disclosed, for example in A. Galiautdinov et.al "Resonator-zero-qubit architecture for superconducting qubits", arXiv:1105.3997v2. The first qubits of the qubit-resonator pairs are capacitively coupled to the respective resonators of the qubit-resonator pairs and are also capacitively coupled to a common bus resonator. Each resonator of the qubit-resonator pairs acts as a memory resonator used for information storage when the qubits are idling. For a single-qubit operation, the quantum information as stored in the memory resonator is moved to the qubit and a microwave pulse is applied thereto. If a two-qubit gate, for example a controlled Z-gate, is desired between a pair of qubits, the state of one of the qubits of the pair is moved to the bus resonator while the frequency of the other qubit of the pair is tuned close to resonance with the bus for a precise duration. This quantum chip allows to switch on and off couplings between qubits capacitively coupled to the bus resonator and leads to longer coherence times of the qubits by using the memory resonators of the qubit-resonator pairs as a memory for information storage when the logical qubits are idling.

Recently, it was understood that a system comprising a qubit capacitively coupled to a resonator may be used for quantum simulation of a spin-boson model with a single spin and a single bosonic mode. Quantum simulation of the dynamics of a quantum mechanical system by use of another quantum system was proposed in S. Lloyd "Universal quantum simulators", Science 273, 1073 (1996). Algorithms for quantum simulation rely on the implementation of a Trotter approximation of the time evolution of the operator for the dynamics in question. As explained in A. Mezzacapo et.al "Digital Quantum Rabi and Dicke Models in Superconducting Circuits", Scientific Reports 4, 7482 (2014) and experimentally demonstrated in N. Langford et.al "Experimentally simulating the dynamics of quantum light and matter at deep-strong coupling", Nature Communications 8,1715 (2017), the dynamics of the quantum Rabi Hamiltonian which describes a spin-boson system may be simulated in a system of a single superconducting qubit capacitively coupled to a resonator via the application of local qubit rotations and qubit-resonator gates utilizing couplings with varying qubit-resonator detunings in the Trotter steps.

Spin-boson and Fermion-boson models are of great interest as many classes of problems can be mapped thereto, for example reactive molecules, organic optoelectronic materials, charge transport, qubit coherence, etc. Quantum simulation is an interesting application for near-term quantum devices as one may expect practical quantum advantage.

Therefore, it is an object of the present invention to provide a quantum chip that allows for resource-efficient simulation of spin-boson models or Fermion-boson models.

This object is according to the invention attained by a quantum chip of the above-mentioned type, wherein the quantum chip further comprises for at least one qubit-resonator pair an associated tunable coupler for enabling the coupling between the first qubit and the resonator. Thus, contrary to the quantum chips of the prior art, the coupling between at least one of the first qubits and the associated resonator is tunable due to the tunable coupler. This allows to obtain different values for the coupling between the first qubit and the resonator and also allows to turn off the coupling between the qubit and the resonator completely. In particular, in-situ qubit-resonator coupling strength adjustment is enabled.

The quantum chip according to the present invention is particularly suitable for simulations of spin-boson or Fermion-boson models. This may be understood as the resonators may each support a bosonic mode, and the qubits being quantum-mechanical two-level systems may be used for encoding the spin or fermionic degree of freedom of the spin-boson or Fermion-boson model to be simulated.

Bosons, fermions and spins are physical objects (including particles, quasi-particles and excitations, but not limited to this) that may be described within the framework of quantum mechanics, in particular second quantization. Terminology used throughout this application is in line with the standard language of quantum mechanics, see e.g., C. Cohen-Tannoudji, "Quantum Mechanics: Volume 2". In particular, a bosonic mode j may be described by a bosonic mode operator $b_j$. The bosonic mode operators fulfill the commutation relation

$$[b_j, b_i^\dagger] = \delta_{ij}$$

. The Hilbert space of a single bosonic mode is infinite dimensional and is spanned by the states $|n_j\rangle$, wherein $n_j = 0,1, \ldots$ is the number of particles, quasi-particles, etc. in the mode j. A single fermionic mode $f_j$ is different, as its Hilbert space is spanned by only two states, $|0\rangle$ (no particle in fermionic mode j), and $|1\rangle$ (one particle in fermionic mode j). The fermionic mode operators fulfill the anticommutation relation

$$\{f_j, f_i^\dagger\} = \delta_{ij}$$

. A spin may be described by quantum mechanical spin operators. The simplest non-trivial case is a spin ½.

The quantum chip comprises a plurality of qubit-resonator pairs, that is, two, three, four, five or more pairs. All first qubits and all resonators may be arranged in the same plane, for example, on a substrate, but the invention is not limited to this. The first qubits may be all of the same type, but the invention is not limited to this. The resonators may be all of the same type, but the invention is not limited to this. The frequency of the mode supported by each resonator may be the same in one example, but the invention is not limited to this. In particular, the frequency of the mode supported by two resonators, in particular by all resonators, may be different in one example.

The qubit chain is a one-dimensional arrangement of qubits and the quantum chip is configured to enable nearest-neighbor coupling between the first qubits. In one example, the chain may be an open chain, that is, qubits at two ends of the chain only have one nearest neighbor, while each qubit away from the two ends has two nearest neighbors. In another example, the chain may be a closed chain, for example in the shape of a circle, but the invention is not limited to this shape. Then, every qubit has two nearest neighbors and the quantum chip is configured to enable nearest-neighbor coupling between said nearest-neighbor qubits.

In one example, the quantum chip comprises a first set of qubit-resonator pairs, each having an associated tunable coupler for enabling the coupling between the first qubit and the resonator, and a second set of qubit-resonator pairs different from the first set wherein coupling between the first qubits and the resonators is not tunable. For example, the non-tunable coupling may be a capacitive coupling. Therefore, only the coupling between the qubits and the resonators of the qubit-resonator pairs of the first set is tunable. In another example, each qubit-resonator pair may have an associated tunable coupler enabling the coupling between the first qubit and the resonator. Then, the coupling between the first qubit and the resonator is tunable for each qubit-resonator pair. Such a quantum chip may allow for a simulation of a wide variety of spin-boson or Fermion-boson Hamiltonians.

In one example, the tunable coupler may comprise a qubit, but the invention is not limited to this.

In one example, the quantum chip may be configured to enable coupling between first qubits which are not nearest neighbors. This may be achieved, for example, by use of a coupling structure, for example a resonator, which extends between the qubits that may be coupled with each other. In one embodiment of the present invention, the qubit chain is configured to enable only nearest-neighbor coupling between the first qubits.

In another embodiment of the quantum chip according to the present invention, the quantum chip may further comprise for each first qubit an associated second qubit and is configured to enable coupling between the first qubit and the associated second qubit, the second qubits being arranged in a one-dimensional chain configured to enable nearest-neighbor coupling, and in particular configured to enable only nearest-neighbor coupling, between the second qubits. The second qubits may be of the same type as the first qubits in one example. In one example, the one-dimensional chain of the second qubits may extend parallel to the one-dimensional chain of the first qubits but the invention is not limited to this. In one example, the qubit chain of the second qubits is configured to enable only nearest-neighbor coupling between the second qubits. However, the invention is not limited to this. Such a quantum chip may be particularly useful for simulating spin-boson models with spins larger ½.

Coupling between the qubits may be enabled by various mechanisms. In one example, the coupling between at least one pair of qubits may be a capacitive coupling. However, the invention is not limited to this. In one embodiment of the present invention, the quantum chip may comprise for at least one pair of qubits having coupling therebetween associated qubit-qubit coupling means for enabling the coupling between the qubits of the pair. In particular, the qubit-qubit coupling means may enable the implementation of iSWAP gates or CZ gates between the qubits, but the invention is not limited to this. The pair of qubits may be a pair of first qubits, a pair of second qubits, or a pair of a first qubit and a second qubit. In one example of said embodiment, the qubit-qubit coupling means may comprise a tunable coupler so that the coupling between the qubits of the at least one pair of qubits is tunable. The tunable coupler may comprise a qubit in one example. The qubit-qubit coupling means may be arranged in the same plane as the qubits and resonators in one example. In one example, the quantum chip may comprise for each pair of qubits having coupling therebetween associated qubit-qubit coupling means for enabling the coupling between the qubits of the pair.

In one embodiment of the present invention, at least one resonator may comprise a co-planar waveguide resonator. In one example, every resonator may comprise a co-planar waveguide resonator. In yet another embodiment of the present invention, at least one resonator may extend transversally to the one-dimensional chain of first qubits. When the one-dimensional chain of first qubits extends along a straight line, at least one resonator, and in particular all resonators may extend transversally, in particular at an angle of 90 degrees to the one-dimensional chain of first qubits. This may be a particularly favorable arrangement of the qubits and resonators of the quantum chip, and the qubits and resonators may have favorable distances from each other.

In one further embodiment of the present invention, said quantum chip may further comprise for at least one of the resonators associated readout means configured for a readout of the quantum state of the resonator.

In one expedient example, said readout means may comprise an ancilla qubit. The ancilla qubit may be the same type of qubit as the first and/or second qubits, but the invention is not limited to this. The ancilla qubit may be directly coupled to the resonator in one example, but the invention is not limited to this. In one example of the embodiment, said quantum chip may comprise for each resonator associated readout means configured for a readout of the quantum state of the respective resonator.

In one embodiment, said quantum chip may further comprise for at least one, and preferably for each resonator associated drive means for operating the resonator.

The type of qubits for the quantum chip of the present invention, in particular the type of the first and second qubits, is not limited. In one expedient embodiment, the qubits may be any type of qubit utilizing a Josephson effect, in particular the qubits may be superconducting qubits more in particular transmons, fluxoniums or unimons. However, the invention is not limited to this.

The coupling between the first qubit and the resonator of the qubit-resonator pair may happen at an arbitrary position of the resonator. However, in one embodiment of the present invention, the resonator of at least one, and preferably of each, qubit-resonator pair comprises first and second ends, and the coupling between the first qubit and the resonator may be enabled at one of the first and second ends. This may enable a space-saving arrangement of the elements of the quantum chip.

In one embodiment, the resonator of at least one, and preferably of each, qubit-resonator pair is connected to another resonator of another one of the qubit-resonator pairs, in particular the quantum chip comprises a tunable coupler for enabling coupling between the resonators. That way, a line of resonators can be made, where each resonator is connected to another resonator of a qubit-resonator pair.

In one embodiment, at least one of the qubits of the first and second qubits and/or at least one of the resonators is connected to an energy dissipation structure, in particular to a quantum circuit refrigerator (QCR).

In one embodiment, the quantum chip further comprises a tunable coupler for enabling the qubit- energy dissipation structure coupling or the resonator - energy dissipation structure coupling so that the coupling between the qubit - energy dissipation structure or the coupling between the resonator - energy dissipation structure is tunable.

According to a second aspect of the present invention, there is provided a method of performing quantum simulation of families of spin-boson or Fermion-boson models using the quantum chip according to anyone of the preceding claims. The quantum chip according to the present invention may allow to simulate spin-boson or Fermion-spin models with multiple spins or multiple Fermionic modes and multiple bosonic modes.

The results of the simulation may be obtained from standard qubit readouts and resonator measurements performed through additional ancilla qubits directly coupled to each resonator.

In the following, the invention is described in further details by way of example with reference to the drawings, wherein

Figure 1     is a schematic representation of a first embodiment of a quantum chip according to the first aspect of the present invention;

Figure 2     is a schematic representation of a second embodiment of a quantum chip according to the first aspect of the present invention.

Figure 3     is a schematic representation of a third embodiment of a quantum chip according to the first aspect of the invention.

Figure 4a    is a schematic representation of a fourth embodiment of a quantum chip according to the first aspect of the invention.

Figure 4b    is a schematic representation of a variant of the fourth embodiment of a quantum chip according to the first aspect of the invention.

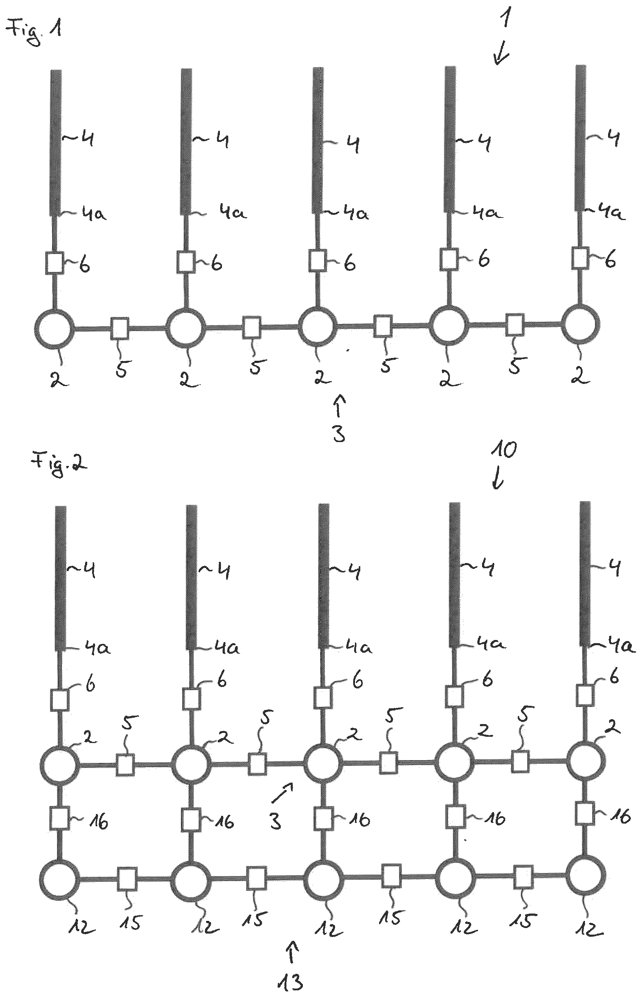

Figure 1 is a schematic representation of a first embodiment of a quantum chip 1 according to the first aspect of the present invention. The quantum chip 1 comprises five qubit-resonator pairs, each pair comprising a first qubit 2 and a resonator 4. Each pair is associated with a tunable coupler 6 for enabling tunable coupling between the first qubit 2 and the resonator 4. The coupling between the first qubit 2 and the respective resonator 4 is at a first end 4a of the resonator. All elements of the quantum chip 1 are arranged in the same plane.

The first qubits 2 are arranged in a one-dimensional chain 3 configured to enable tunable nearest-neighbor coupling between the first qubits 2 by tunable couplers 5 arranged between neighboring first qubits 2. The one-dimensional chain 3 extends in a straight line, but the embodiment is not limited to this. The resonators 4 extend transversally, and in particular at an angle of 90°, to the one-dimensional chain 3 of first qubits, but the embodiment is not limited to this.

The quantum chip 1 further comprises for each resonator 4 associated readout means (not shown) for reading out the quantum state of the resonator 4, and drive means configured to perform a drive of the resonator 4 by an electromagnetic field.

The quantum chip 1 shown in Figure 1 is particularly suitable for quantum simulation of spin-boson or Fermion-boson models. The resonators 4 each support a bosonic mode, and the first qubits 2 being quantum-mechanical two-level systems may encode the spin or Fermionic degree of freedom.

Figure 2 is a schematic representation of a second embodiment of a quantum chip 10 according to the first aspect of the present invention. The quantum chip 10 is similar to the quantum chip 1 shown in Figure 1 in that it comprises five qubit-resonator pairs, each comprising a first qubit 2 and a resonator 4, wherein a tunable coupler is associated with each of the qubit-resonator pairs and configured to enable tunable coupling between the first qubit 2 and the resonator 4. Furthermore, the quantum chip 10 comprises four tunable couplers 5 arranged between neighboring first qubits 2 for enabling tunable nearest-neighbor coupling between neighboring first qubits 2. All elements of the quantum chip 10 are arranged in the same plane. The quantum chip 10 further comprises for each resonator 4 associated readout means (not shown) for reading out the quantum state of the resonator 4, and drive means configured to perform a drive of the resonator 4 by an electromagnetic field.

Furthermore, the quantum chip 10 comprises for each first qubit 2 an associated second qubit 12 and is configured to enable coupling between the first qubit 2 and the associated second qubit 12. To this end, the quantum chip 10 comprises five tunable couplers 16, each arranged between a respective pair of first and second qubits 2, 12 and providing tunable coupling therebetween. The second qubits 12 are arranged in a one-dimensional chain 13 configured to enable nearest-neighbor coupling. To this end, the quantum chip 10 comprises four tunable couplers 15 arranged between neighboring second qubits 12 and providing tunable coupling therebetween.

The quantum chip 10 shown in Figure 2 is particularly suitable for quantum simulation of spin-boson and Fermion-boson models. The resonators 4 each support a bosonic mode, and the first and second qubits 2, 12 being quantum-mechanical two-level systems may encode the spin or fermionic degrees of freedom.

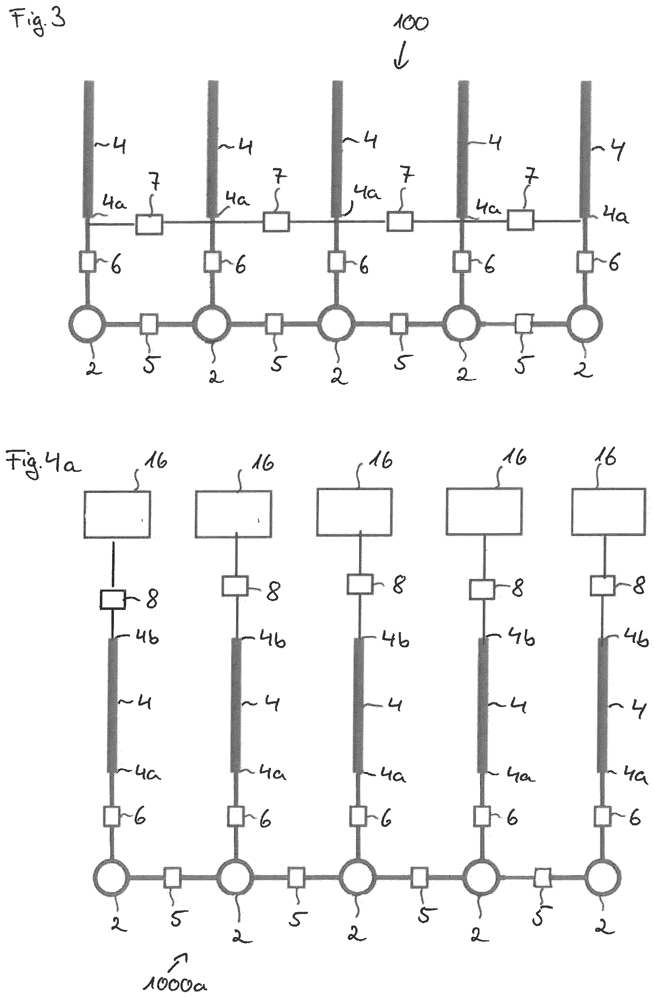

Figure 3 is a schematic representation of a third embodiment of a quantum chip 100 according to the first aspect of the present invention. The quantum chip 100 is similar to the quantum chip 1 shown in Figure 1 in that it comprises five qubit-resonator pairs, each comprising a first qubit 2 and a resonator 4, wherein a tunable coupler 6 is associated with each of the qubit-resonator pairs and configured to enable tunable coupling between the first qubit 2 and the resonator 4. Furthermore, the quantum chip 100 comprises four tunable couplers 5 arranged between neighboring first qubits 2 for enabling tunable nearest-neighbor coupling between neighboring first qubits 2. All elements of the quantum chip 100 are arranged in the same plane. The quantum chip 100 further comprises for each resonator 4 associated readout means (not shown) for reading out the quantum state of the resonator 4, and drive means configured to perform a drive of the resonator 4 by an electromagnetic field.

Furthermore, the resonator 4 of each of the qubit-resonator pair may be connected to at least another resonator 4 of another qubit-resonator pair. As shown in Figure 3, the connection between the resonators can be provided with a tunable coupler 7 and provides for a spatially correlated environment. However, the resonators can also be connected to each other directly. In Figure 3, the connection between the tunable coupler 7 and the resonator 4 is enabled at one end 4a of the first and second ends of the resonator 4. However, in a variant, the coupling between the tunable coupler 7 and the resonator 4 of the qubit-resonator pair may happen at an arbitrary position of the resonator. For example, one way to have a tunable coupler between resonators may be to use a SQUID to inductively couple the resonator. In that case, the tunable couplers 7 would be connected to the center of the resonators 4.

In a variant, all the resonators 4 of the qubit-resonator pairs may be connected to each other. Furthermore, if the coupling between the resonators 4 is provided via a tunable coupler, the spatial correlation can be tuned, i.e. decreased or increased, to simulate open system dynamics.

In one embodiment, the resonator 4 can be fabricated with different quality factors to provide the desired dissipation factor for the resonator 4.

The quantum chip 100 shown in Figure 3 is particularly suitable for quantum simulation of open system dynamics.

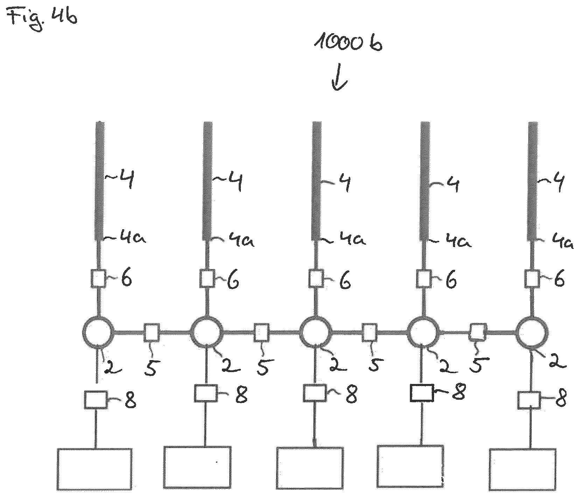

Figures 4a and 4b are a schematic representation of a fourth embodiment of a quantum chip 1000a, 1000b according to the first aspect of the present invention. The quantum chip 1000a, 1000b are similar to the quantum chip 1 shown in Figure 1 in that they comprise five qubit-resonator pairs, each comprising a first qubit 2 and a resonator 4, wherein a tunable coupler 6 is associated with each of the qubit-resonator pairs and configured to enable tunable coupling between the first qubit 2 and the resonator 4. Furthermore, the quantum chips 1000a, 1000b comprise four tunable couplers 5 arranged between neighboring first qubits 2 for enabling tunable nearest-neighbor coupling between neighboring first qubits 2. All elements of the quantum chips 1000a, 1000b are arranged in the same plane. The quantum chips 1000a, 1 000b further comprise for each resonator 4 associated readout means (not shown) for reading out the quantum state of the resonator 4, and drive means configured to perform a drive of the resonator 4 by an electromagnetic field.

Furthermore, an energy dissipation structure 16 may be coupled directly or via a tunable coupler 8 to one of the qubits 2 or to one of the resonators of the qubit-resonator pair. An example of an energy dissipation structure may be a quantum circuit refrigerator or QCR. Figure 4a shows the embodiment where the energy dissipation structure 16 is coupled to the resonator 4 of the qubit-resonator pair, while Figure 4b illustrate the embodiment where the energy dissipation structure 16 is coupled to the qubit 2 of the qubit-resonator pair.

In Figure 4a, the coupling between the energy dissipation structure 16 and the resonator 4 is enabled at one end 4b of the first and second ends 4a,b of the resonator 4. However, in a variant, the coupling between the energy dissipation structure 16 and the resonator 4 of the qubit-resonator pair may happen at an arbitrary position of the resonator 4.

In the case where the energy dissipation structure 16 is coupled to the resonator 4, this coupling provides the possibility to have an environment with a continuous spectral density, wherein the environment comprises the resonator 4 and the energy dissipation structure 16. Furthermore, when the coupling between the resonator 4 and the energy dissipation structure 16 is realized with a tunable coupler 8, it is possible to shape the spectral density of the environment.

The energy dissipation structure 16, for example a quantum circuit refrigerator QCR, is configured to be a continuous reservoir, and when coupled to the resonator 4 through a tunable coupler 8 it provides for different dissipative regimes. These have at least two limits: for strong coupling between the energy dissipation structure 16 and the resonator 4, there is a fast dissipation, and the energy dissipation structure - resonator environment produces a Markovian (memoryless) environment for the qubit 2; for weak coupling between the energy dissipation structure 16 and the resonator 4, the energy dissipation structure - resonator environment has a slow dissipative component and produces a non-Markovian environment for the qubit 2.

In a variant, instead of having each resonator 4 coupled to a respective energy dissipation structure 16, there could be only one energy dissipation structure 16 coupled to more than one resonator or to all the resonators 4 together.

The quantum chips 1000a, 1000b shown in Figures 4a and 4b are particularly suitable for providing different dissipative regimes for the qubits 2.

**Claims**

1. Quantum chip (1, 10, 100, 1000a, 1000b) comprising a plurality of qubit-resonator pairs (2, 4), each pair comprising a first qubit (2) and a resonator (4) and being configured to enable coupling therebetween, said first qubits (2) being arranged in a one-dimensional chain (3) configured to enable nearest-neighbor coupling between the first qubits (2), **characterized in that** the quantum chip (1, 10) further comprises for at least one qubit-resonator pair an associated tunable coupler (6) for enabling the coupling between the first qubit (2) and the resonator (4).

2. Quantum chip (1, 10, 100, 1000a, 1000b) according to claim 1,
   wherein the qubit chain (3) is configured to enable only nearest-neighbor coupling between the first qubits (2).

3. Quantum chip (1, 10, 100, 1000a, 1000b) according to anyone of the preceding claims, wherein the quantum chip (1, 10) further comprises for each first qubit (2) an associated second qubit (12) and is configured to enable coupling between the first qubit (2) and the associated second qubit (12), the second qubits (12) being arranged in a one-dimensional chain (13) configured to enable nearest-neighbor coupling, and in particular configured to enable only nearest-neighbor coupling, between the second qubits (12).

4. Quantum chip (1, 10, 100, 1000a, 1000b) according to anyone of the preceding claims, wherein said quantum chip (1, 10) further comprises for at least one pair of qubits (2, 12) having coupling therebetween associated qubit-qubit coupling means (5, 15, 16) for enabling the coupling only between the qubits (2, 12) of the pair.

5. Quantum chip (1, 10, 100, 1000a, 1000b) according to claim 4,
   wherein the qubit-qubit coupling means (5, 15, 16) comprises a tunable coupler (5, 15, 16) so that the coupling between the qubits (2, 12) of the at least one pair of qubits (2, 12) is tunable.

6. Quantum chip (1, 10, 100, 1000a, 1000b) according to anyone of the preceding claims, wherein at least one resonator (4) comprises a coplanar waveguide resonator.

7. Quantum chip (1, 10, 100, 1000a, 1000b) according to anyone of the preceding claims, wherein at least one resonator (4) extends transversally to the one-dimensional chain (3) of the first qubits (2).

8. Quantum chip (1, 10, 100, 1000a, 1000b) according to anyone of the preceding claims, wherein said quantum chip (1, 10) further comprises for at least one of the resonators (4) associated readout means configured for a readout of the quantum state of the resonator (4), said readout means preferably comprising an ancilla qubit.

9. Quantum chip (1, 10, 100, 1000a, 1000b) according to anyone of the preceding claims, wherein said quantum chip (1, 10) further comprises for at least one, and preferably for each resonator (4) associated drive means for operating the resonator (4).

10. Quantum chip (1, 10, 100, 1000a, 1000b) according to anyone of the preceding claims, wherein the qubits (2, 12) are configured to utilize a Josephson effect, in particular the qubits are superconducting qubits, more in particular the qubits are transmons, fluxoniums or unimons.

11. Quantum chip (1, 10, 100, 1000a, 1000b) according to anyone of the preceding claims, wherein the resonator (4) of at least one, and preferably of each, qubit-resonator pair comprises first and second ends (7), and the coupling between the first qubit (2) and the resonator (4) is enabled at one of the first or second ends.

12. Quantum chip (100) according to anyone of the preceding claims,
wherein the resonator (4) of at least one, and preferably of each, qubit-resonator pair is connected to another resonator (4) of another one of the qubit-resonator pairs, in particular the quantum chip (1, 10, 100, 1000a, 1000b) comprises a tunable coupler (7) for enabling the coupling between the resonators (4).

13. Quantum chip (1000a, 1000b) according to anyone of the preceding claims,
wherein at least one of the qubits (1, 2) of the first and second qubits and/or at least one of the resonators (4) is connected to an energy dissipation structure (16), in particular to a quantum circuit refrigerator (16).

14. Quantum chip (1000a, 1000b) according to claim 13, wherein the quantum chip further comprises a tunable coupler (8) for enabling the qubit- energy dissipation structure coupling or the resonator - energy dissipation structure coupling so that the coupling between the qubit - energy dissipation structure or the coupling between the resonator - energy dissipation structure is tunable.

15. Method of performing quantum simulation of families of spin-boson or Fermion-boson models using the quantum chip (1, 10) according to anyone of the preceding claims.

Fig. 1

Fig. 2

Fig. 3

100

Fig. 4a

1000a

Fig. 4b

1000 b

| | Europäisches Patentamt European Patent Office Office européen des brevets | **EUROPEAN SEARCH REPORT** | **Application Number** EP 25 19 0076 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/041833 A1 (IQM FINLAND OY [FI] ET AL.) 23 March 2023 (2023-03-23) * pages 1, 3; figure 2 * ----- | 1-15 | INV. G06N10/40 |
| X | DANIEL M TENNANT ET AL: "Demonstration of long-range correlations via susceptibility measurements in a one-dimensional superconducting Josephson spin chain", ARXIV.ORG, CORNELL UNIVERSITY LIBRARY, 201 OLIN LIBRARY CORNELL UNIVERSITY ITHACA, NY 14853, 8 November 2021 (2021-11-08), XP091096689, * page 3; figure 1a * ----- | 1-15 | |
| X | CA 3 196 631 A1 (IQM FINLAND OY [FI]) 5 May 2022 (2022-05-05) * paragraphs [0008], [0009], [0013], [0016]; figure 15 * ----- | 1-15 | |
| A | WO 2023/156701 A1 (IQM FINLAND OY [FI]) 24 August 2023 (2023-08-24) * paragraphs [0068], [0074], [0075], [0095]; figures 2, 3 * ----- | 13,14 | TECHNICAL FIELDS SEARCHED (IPC) G06N |
| A | EP 4 318 332 A1 (KIPU QUANTUM GMBH [DE]) 7 February 2024 (2024-02-07) * paragraph [0116] * ----- | 15 | |

The present search report has been drawn up for all claims

| Place of search | Date of completion of the search | Examiner |
|---|---|---|
| The Hague | 11 December 2025 | Keane, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                     

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0076

11-12-2025

| Patent document cited in search report | Publication date | Patent family member(s) | Publication date |
|---|---|---|---|
| WO 2023041833 A1 | 23-03-2023 | EP 4402615 A1 | 24-07-2024 |
| | | JP 2024531988 A | 03-09-2024 |
| | | KR 20240067904 A | 17-05-2024 |
| | | TW 202312041 A | 16-03-2023 |
| | | US 2025131308 A1 | 24-04-2025 |
| | | WO 2023041833 A1 | 23-03-2023 |
| CA 3196631 A1 | 05-05-2022 | CA 3196631 A1 | 05-05-2022 |
| | | CN 114447554 A | 06-05-2022 |
| | | CN 214477843 U | 22-10-2021 |
| | | EP 3992867 A1 | 04-05-2022 |
| | | EP 4576422 A2 | 25-06-2025 |
| | | IL 302059 A | 01-06-2023 |
| | | JP 2023546867 A | 08-11-2023 |
| | | KR 20230098205 A | 03-07-2023 |
| | | PL 3992867 T3 | 13-10-2025 |
| | | TW 202236175 A | 16-09-2022 |
| | | US 2022140001 A1 | 05-05-2022 |
| | | WO 2022090621 A1 | 05-05-2022 |
| WO 2023156701 A1 | 24-08-2023 | US 2025148336 A1 | 08-05-2025 |
| | | WO 2023156701 A1 | 24-08-2023 |
| EP 4318332 A1 | 07-02-2024 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LLOYD**. Universal quantum simulators. *Science*, 1996, vol. 273, 1073
- **A. MEZZACAPO**. Digital Quantum Rabi and Dicke Models in Superconducting Circuits. *Scientific Reports*, 2014, vol. 4, 7482
- **N. LANGFORD**. Experimentally simulating the dynamics of quantum light and matter at deep-strong coupling. *Nature Communications*, 2017, vol. 8, 1715